# EUROPEAN PATENT APPLICATION

(11) **EP 3 264 353 A1**
(43) Date of publication of application: **03.01.2018**
(21) Application number: 17188039.6
(22) Date of filing: 15.08.2011
(51) Int. Cl.: G06Q 30/00, G06Q 30/06

(54) **PRODUCT AUTHENTICATION METHOD**

(30) Priority: 27.08.2010 EP 10174422
(62) Divisional of application: 11775746.8
(71) Applicant: JT International SA, 1202 Geneva (CH)
(72) Inventor: SCHMITZ, Reiner, CH-1233 Bernex (CH)
(74) Representative: Gill Jennings & Every LLP

(57) **Abstract**

A method as described for verifying the authenticity of a product, comprising the steps of: receiving a plurality of authentication labels, the authentication labels each comprising one of a series of unique identifiers, the series of unique identifiers being stored in an authentication database; applying each of the authentication labels to a series of products; entering in the database product information corresponding to the series of products to which the label has been applied; associating the product information with the series of unique identifiers in the database; communicating to the issuer of the labels validation information concerning the products to which the authentication labels have been applied.

A complementary method of verifying the authenticity of a product is disclosed, comprising the steps of: issuing a plurality of authentication labels to a manufacturer of a product, the authentication labels each comprising one of a series of unique identifiers, the series of unique identifiers being stored in an authentication database; receiving from the manufacturer product information corresponding to the series of products to which the label has been applied; associating the product information with the series of unique identifiers in the database; receiving from the manufacturer validation information corresponding to the products to which the authentication labels have been applied. Followed by optional database formats and further validation steps are as also described.

## Description

The present invention relates to a method of verifying the authenticity of a product. In particular, the invention relates to a method of verifying whether a product has been correctly authorised for sale by an authorising body. The invention may further be applied to the verification of features of a product against those authorised for the sale of the product by an authorising body.

In a wide range of production industries, it may be desirable for an authorising body to verify whether a product on sale in a territory has been properly authorised for sale by them. Different products or versions of products destined for different territories may have different characteristics and may be sold at different price levels in different territories. An authorising body may have the task of ensuring that products on sale in particular territory were indeed manufactured for that territory and intended to be sold in that territory. The manufacture of the product may not be under the direct control of the authorising body. The product may be manufactured by a third party, a manufacturer, and sold by that manufacturer in a number of different territories. An authorising body in each of the different territories supplied by the manufacturer may wish to have some means of verifying whether the product has been correctly authorised for sale in that market by the authorising body. The authorising body may be a government, which may wish to verify that products on sale in a country have been authorised for sale and the correct taxes have been paid on those products. Further, a consumer may wish to verify whether a product that they have bought in a particular place has indeed been authorised for sale in that place, or territory, and may also wish to check that the product has been manufactured with the product characteristics that they would normally expect of a product on sale in that particular territory. Accordingly, there is a need for a flexible system of product authentication, which may be adapted to the needs of various authorising bodies in various product markets and which may be accessible to a range of parties for verifying the authenticity of a product.

According to the present invention there is provided a method of verifying the authenticity of a dutiable product, comprising the steps of:
receiving a plurality of authentication labels, the authentication labels each comprising one of a series of unique identifiers, the series of unique identifiers being stored in an authentication database;
applying each of the authentication labels to a series of products;
entering in the database product information corresponding to the series of products to which the label has been applied;
associating the product information with the series of unique identifiers in the database;
communicating to the issuer of the labels validation information corresponding to the products to which the authentication labels have been applied.

The present invention further provides a method of verifying the authenticity of a dutiable product, comprising the steps of:
issuing a plurality of authentication labels to a manufacturer of a product, the authentication labels each comprising one of a series of unique identifiers, the series of unique identifiers being stored in an authentication database;
receiving from the manufacturer product information corresponding to the series of products to which the label has been applied;
associating the product information with the series of unique identifiers in the database;
receiving from the manufacturer validation information corresponding to the products to which the authentication labels have been applied.

The method of the present invention presents numerous advantages. An authorising body may issue authentication labels to a manufacturer in the method of the present invention, and may therefore be the issuer of the labels. The act of issuing the labels can include providing authorisation for a printer or printing body to issue labels to the manufacturer on behalf of the authorising body. The production of the authentication labels may therefore be under the control of the authorising body, which means that the authorising body has control over how, where and by what methods of production the authentication labels are issued, and also controls how many labels are issued. The use of authentication labels each comprising one of a series of unique identifiers may simplify the process of entering in the database product information corresponding to the series of products to which the label has been applied. Where a series of sequential unique identifiers is used, the manufacturer may use a sequential series of numbers for a batch of products having identical product characteristics. In this way, the same set of product characteristics may be stored in the database against a whole series of sequential unique identifiers. This means that, for example, product information relating to thousands of products may simply be input to the database in a single operation. This is advantageous when compared to a system where individual product information relating to individual unique identifiers must be recorded and input to a database for each individual product. Communicating to the issuer of the labels validation information concerning the products to which the authentication labels have been applied in a separate step allows the issuer of the labels to cross check this information with the product information stored in the database. Any one of the manufacturer and/or the authorising body may then check the information in the database against actual product information of a product supplied by the manufacturer. The data held in the database, including the product information and validation information, may collectively be described as authentication information, since it can collectively be used to verify the authenticity of a product. This can be done by determining whether the label applied corresponds correctly to the characteristics of the product to which it has been applied, for use in the area that the product has been found in, and whether the label has been correctly validated for use by the manufacturer or distributor of the product. The method of the present invention presents a particular advantage for the authentication of dutiable products. A dutiable product is a product liable to customs or other duties. In particular, duty paid for a dutiable product is often related to characteristics of the individual product. Therefore, a body collecting and verifying the duties paid on a dutiable product has a need for an efficient way of ensuring that the duty paid to the collecting body for each individual product, by a manufacturer, importer or a distributor, corresponds correctly to the product characteristics. The method of the present invention provides a reliable, secure, cost effective, and efficient method for achieving this task. The method does not require a broad-based installation of new or bespoke hardware at multiple sites and therefore makes more efficient use of hardware as compared to other methods and systems known in the art.

The information communicated to the issuer of the labels may further comprise usage information for the product to which the labels have been applied. This may comprise information such as the market in which the products are intended to be sold to the consumer and/or information relating to the distribution chain and parties involved therein, or information such as a port of entry to a country or a border crossing point. Some or all of this type of usage information may also be applied to the label itself. The provision of this information can further permit the authorising body to verify where a particular product has been authorised for sale or use. Validation information provided to the issuer of the labels by the manufacturer may comprise a payment and/or a payment reference to indicate that a payment has been made to the issuer of the labels, corresponding to the product to which the label has been applied. The labels may only be deemed validly used if corresponding validation information, which may comprise a payment and/or a payment reference, has been communicated to the issuer of the labels.

A method according to the present invention may further comprise the step of querying the database to extract information concerning a number of used unique identifiers and generating a report based on the information extracted. The method may further comprise the step of providing information based upon the report to the authorising body. The report received by the authorising body from the manufacturer may be compared with the information stored in the database. This allows a cross-check to be carried out between the information based on the report and provided by the manufacturer, with the centralised data held in the database. Alternatively, it can also allow the authorising body to check the information held in the database and send an invoice to the manufacturer.

The report may comprise a payment reference, which may be associated with a range of unique identifiers and to a payment made to the authorising body. This provides a method which allows the authorising body to cross-check that a payment which has been made to it by the manufacturer corresponds correctly to the usage of a range of unique identifiers, which has been declared by the manufacturer in a separate step.

The authentication labels may further comprise a second unique identifier, the second unique identifier being associated with the first unique identifier in the database. Using a pair of unique identifiers can help to highlight any instance where one of the series of sequential unique identifiers may have been used twice. This can help to avoid counterfeiting of a series of authentication labels.

Product information relating to the product to which the authentication label has been applied may further be applied to the authentication label. This can help to avoid an authentication label destined for a particular product being used on a product with different characteristics. The product information can therefore include product characteristics, such as a list of contents etc, but may also include its origin such as the place it was made, and/or use limitations such as an expiry date.

The product may be a tobacco product and the product information may comprise any or all of:
number of individual items in the product; amount of tobacco contained in the product; the entire content of the product; nicotine content of the product; and a price of the product. The use of any or all of these particular parameters, either alone or in combination, may be particularly suited to adapting the method of the present invention to a government issuing tax stamps to a cigarette manufacturer. The products may comprise beverage or alcoholic products, and the information stored in the database and/or applied to the labels may comprise information such as alcohol content by volume, volume of product, number of units of alcohol etc. may be applied to the label and/or input to the database.

The method may further comprise the steps of retrieving at least one product to which one of the authentication labels has been applied and comparing either one, or both of, the unique identifier(s) with information in the database, to determine the authenticity of the product. This step allows a member of the public, a manufacturer or the issuer of the authentication labels to verify whether a product has been correctly authorised by the label issuer.

The unique identifier may further be compared with the product information received from the manufacturer and/or with the validation information stored in the database. This step allows a cross check for the issuer of the authentication labels to check that the labels are being properly used.

The second unique identifier may represent a randomly generated code. The randomly generated code, being associated with the sequential code in the database, may be used to verify that the sequential number appearing on the authentication label has been issued by the issuer of the authentication labels. The second unique identifier may be generated using an encryption key to encrypt the first unique identifier and a single key may optionally be used to encrypt a series of identifiers. In either case, only the encryption key need be stored in the database to create the association between the first and second unique identifiers. In this way less storage memory may be required than in the case where all of the second unique identifiers are individually stored.

Either one or both of the first and second unique identifiers may be an overt code. The use of an overt code allows any consumer, manufacture or user of a product to read the codes and to compare them with the information stored in the database, for product authentication purposes.

Either one or both of the first and second unique identifiers may be a covert code. The use of covert codes can restrict access to the verification codes to authorised parties in possession of a device capable of reading the covert code. This can have the benefit of preventing third parties from easily reproducing the authentication labels by copying either one or both of the codes. Overt and covert codes may also be used in combination on the authentication labels, such that one of the codes is overt and one of the codes is covert.

Both of the first and second unique identifiers may be overt codes, visible to the human eye. This allows any human user to read the codes to carry out an authentication check without the need for specialised equipment. Both of the first and second unique identifiers may be overt codes, readable by a light sensitive input device. This can allow the codes on the authentication labels to be read by standard light sensitive code readers, which are freely available and can therefore be cost effective to deploy.

At least one of the unique identifiers may contain an encrypted code. The use of encrypted codes in the system can restrict to copying, reproduction and use of the codes to a user equipped with a suitable decryption key or decryption device.

The label may comprise an anti counterfeiting element. An anti counter fitting element used on the label may further reduce the likelihood of authentication labels being copied and reused on counterfeit products.

The database may be accessible to all or any one of: the public, the manufacturer; and the issuer of labels, for product authentication purposes. This can allow any one of the listed parties to carry out a product verification, such that the step of verifying the authenticity of the product is free for any party to use and does not require any specifically authorised or specialised access to carry out the authentication step.

The database may be configured to report when a particular unique code has been queried more than a set threshold number of times. It may be expected that a particular product may only need to be authenticated via the database a finite number of times throughout its normal life. This may be just once or a particular number of times, such as two times, three times, or more, through the manufacturing and distribution process. The configuration of the database to monitor for multiple queries of the same authentication code can help to highlight when a particular code has been reused a number of times in an unauthorised manner. To further improve the function of detecting an unauthorized use or copying of a label, a category (for example one of an authorizing body, an authorising body, manufacturer, customer etc...) and/or an identifier and/or code associated with the person who is the source of the query may be sent to the database with a query. The set threshold may be adjusted according to the category and/or identification of the person who sent the query. Thus, for example, the threshold number of times that a customer could send a query of the same authentication code before an alert is generated could be set to a number of times lower than that for an authorising body or a manufacturer. Therefore, the method may include a step in which an alert is generated if a unique code has been queried more than a set threshold number of times, and that threshold may be optionally varied in accordance with the category or identity of the source of the query.

The method may further comprise the step of recording in the database a value indicating that a particular unique identifier has been destroyed. When a label or identifier has been destroyed, a value can be recorded in the database indicating that this has occurred. This can prevent the re-use of destroyed labels by an unauthorised party.

At least one unique identifier stored in the database may correspond to a primary container and secondary containers may be associated with the primary container by means of secondary container unique identifiers, the secondary container unique identifiers comprising the unique identifier of the primary container. This association allows more efficient use of the database memory.

The method of the present invention, and a system configured to allow the method to be carried out, each enable a user to distinguish authentication labels that have been stolen from those that have been activated and correctly declared by registration on the database.

The invention also provides a system or systems configured to receive, store and/or transmit the information described above and/or to create the labels and/or to add information to the labels as described in relation to the above methods.

The use of authentication labels is generally described herein. However, where the use of a label is described, it may equally be replaced by other identifying means, such as tear tapes on packaging or any other means of product identification.

A further advantage of the system and method of the present invention is that the authorising body, such as a government, as well as a party producing and issuing labels to the manufacturer only have to manage one variant of a label or identifier instead of product-specific labels or identifiers, while being able to monitor all relevant parameters that influence the authenticity of the product and other factors such as the taxes due, where relevant.

A further advantage is that the number of labels or identifiers issued can be controlled by the authorising body and/or a label printer acting for the authorising body, while the manufacturer controls and declares the usage of the labels or identifiers.

A specific example embodiment of the invention will now be described, with reference to the following figures, in which:
Figure 1 depicts examples of products, with examples of authentication labels attached thereto;
Figure 2 depicts a process through which authentication label usage data is applied and collected;
Figure 3 depicts example data table structures which may be used in accordance with the present invention; and
Figure 4 depicts a system suitable for carrying out the method of the present invention.

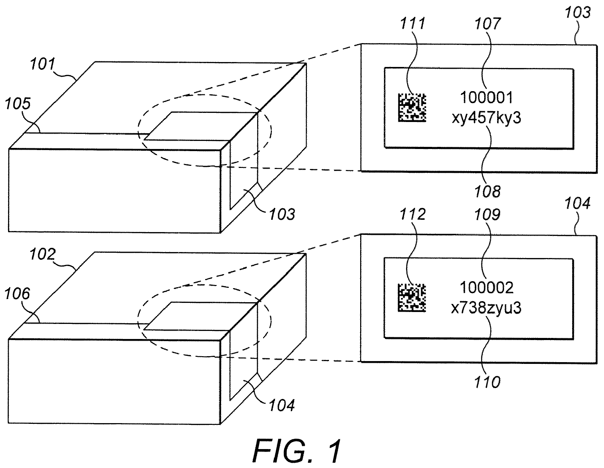

Figure 1 shows two products 101, 102, which have been manufactured and packaged by a manufacturer. The products may be any consumable or consumer product. In particular, the products may be a product sold under the control of an authorising body, which is a separate entity from the manufacturer. The manufacturer may be a licensee. In particular, the authorising body may be a government and the product may be a product which is subject to a certain tax excise. The product may be a tobacco product, an alcoholic product or any other dutiable product, for which a Government or other authorising body wishes to control an amount of tax or duty paid on the product. The method of the present invention may be utilised to monitor the amount of tax paid to a government by a manufacturer before the products are made available to a consumer.

Products 101 and 102 have applied to them authentication labels 103 and 104. The authentication labels may be applied over an opening portion 105, 106, of the product, such that when the product is first opened or used, it becomes evident that this has occurred, since authentication label 103, 104 will be broken when the product is first used. This can help prevent the authentication label from being used multiple times on multiple products.

Authentication label 103 has a serial number 107. In the particular illustrated example, the serial number is a six digital serial number. In practice, a twelve digit serial number may be used, or an alphanumeric code may be used. The serial number may be a number or alphanumeric code having more than twelve digits, which may allow the provision of the necessary volumes of serial numbers. The serial number may be configured in such a way that it is possible to distinguish serial numbers that have been released by an authorising body in different countries or territories, such as part of the code being a country identification field or an authorising body identification field. The authentication labels will be issued in batches corresponding to a set of sequential serial numbers. The sequence may not necessarily be a linear sequence. The use of a subset of serial numbers between an upper and a lower limit may provide further means of detection of the use of counterfeit labels within a certain range. A benefit of the present invention is that product data is entered in a database in one operation for all labels between a lower boundary serial number and an upper boundary serial number. Each label issued is associated with a serial number. However, the exact serial number may not necessarily be applied directly to the label. An encrypted version of the serial number may be applied to the label, as will be described in more detail later in this specification. Authentication label 103 is also shown having a second unique identifier 108. In the example shown, the unique identifier is a randomly generated series of eight characters. Other randomly generated unique identifiers may be used and may be applied to the authentication label in a number of ways. The identifier may be any random code detectable by a machine and may be printed, etched, burned, embossed, or embedded within the label by any technique, such as those used for bank notes or identity cards or government tax stamps. The uniquely generated code may also be a random code generated by scanning unique aspects of the label, such as the grain of the substrate from which the authentication label has been manufactured, or any other inherent unique property of the label. This code generated from unique features of the label may then be associated with the label in a database. The association of a randomly generated unique identifier with serial number 107 can help to detect the false or repeated usage of serial number 107 on multiple products.

Encryption keys for creating a unique code may also be stored in the database. Unique codes may be created by a suitable encryption and authentication technique, such as RSA (Rivest, Shamir and Adelman), DES (Digital Encryption Standard) or other such suitable methods. The encryption key may be stored in the database and used to create a unique identifier based upon the serial number associated with each label. With knowledge of the encryption key used, it is possible to decrypt the encrypted code to find the serial number with which a label is associated in the database. In this way, it is possible to apply an encrypted version of the serial number on to the authentication label and the actual serial number need not necessarily be applied to the label.

Alternatively, a label may be marked with both a serial number and its encrypted version, encrypted with a secret key stored only in the database. This can provide a method of verifying that the combination of codes is a valid one and as long as the encryption key is kept secret, the combinations of serial numbers and their encrypted equivalents cannot be counterfeited.

Authentication label 104 may have the same serial number 109 as authentication label 103, or a different serial number. A different unique identifier 110 has been applied to authentication label 104. A feature of the system and method described is that only authentication labels having a valid pairing of serial number 107, 109, and randomly generated unique identifier 108, 110, are deemed to be validly issued by the authorising body. It may be possible to generate multiple randomly generated unique identifiers and to associate them with a single serial number. This may occur if the issuer of the authentication labels wishes to make multiple use of a single serial number, although this may not be a preferred method of use. However, it does reduce the need for a large number of serial numbers. This may alternatively be carried out by using multiple encryption keys to generate different encrypted codes based upon a single serial number. In the example described, a single set of product information will be entered in the database and associated with each sequential serial number 107, 109. If those labels having the same serial numbers are applied to identical products and the two randomly generated identifiers 108 and 110 are associated with a single serial number 107 in the database, then the two authentication labels 103 and 104 can both be validly associated with the same serial number and their validity can be verified in the database. However, if, for example, randomly generated identifier 110 has been created by an unauthorised party, then the pairing of serial number 109 and random identifier 110 will not be stored in the database and a simple check against the data in the database will show that, in this case, the authentication label 104 is not valid and has not been issued by the authorising body. If multiple labels were issued corresponding to a single serial number, the number of labels produced with the same serial number would need to be recorded in the database and the manufacturer would need to use all the stamps with identical serial numbers for the same product and/or production run.

In addition to, or as an alternative to, identifiers 107 to 110, 1-D or 2-D barcodes 111, 112, or any other encoded identifier may be applied to the label. The encoded identifiers may include either one or both of identifiers 107 and 108 or 109 and 110 and may also comprise encoded product and/or usage information.

In addition to the identifiers described above, the label or identifier may comprise further security features, such as: security inks, which may include taggants or pigments; security paper; digital watermarking; holograms; magnetic strips, taggants; RFID chips; security printing, such as Microprinting or Intaglio; fingerprint technology, such as that provided under the trade marks FractureCode™ or Ingenia™; or the technologies available from suppliers such as: Alpvision Cryptoglyph™, Schreiner Bitsecure™, Schreiner Mini-Label™, Tesa Holospot™, Advanced Track & Trace™.

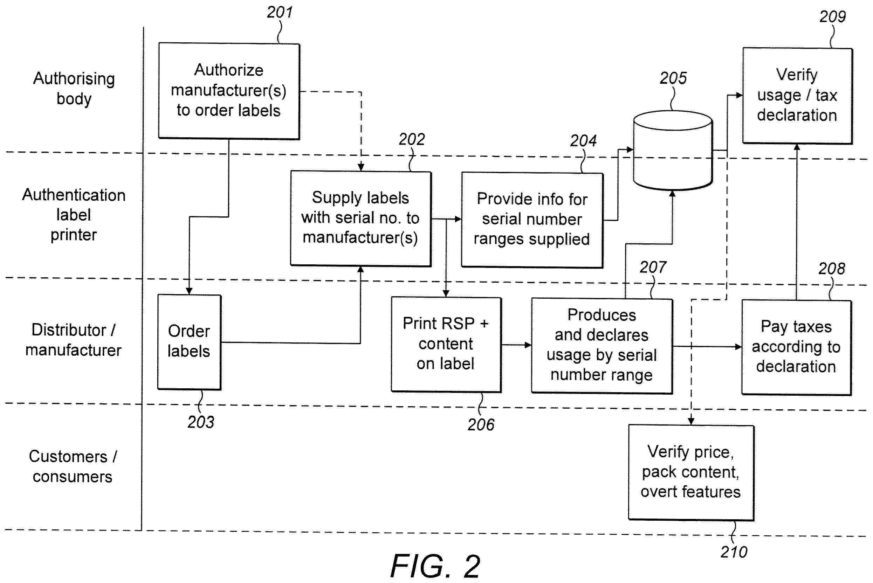

Figure 2 shows a flow diagram of the steps carried out during a particular example of a use of the method of the present invention.

The overall process embodying the method of the present invention may involve four parties: an authorising body; an authentication label printer; a manufacturer; and a consumer. In a first step 201, the authorising body gives an authorisation for authentication labels to be produced. This may be issued directly to an authentication label printer 202, or alternatively, the authorisation may be given to the manufacturer as step 203, authorising it to order authentication labels from the printer. The printer may be within the authorising body, or alternatively, the printer may be a separate entity from the authorising body, acting as an agent on its behalf. The printer may be an automated machine, receiving and automatically reacting to orders from the authorising body or from the manufacturer. In a next step, the printer creates authentication labels with sequential serial numbers, and optionally with product information, and supplies these to the manufacturer in step 202. The product information can include product characteristics, such as a list of contents etc, but may also include its origin such as the place it was made, and/or use limitations such as an expiry date

In step 204, the printer provides, to database 205, information concerning the authentication labels produced. This will include the serial numbers supplied to the authentication labels and any randomly generated unique identifiers associated with each label. In step 206 the manufacturer may add further information to the authentication label, including specific product information. In the case of a tobacco product, the information applied to the label and/or input to the database may comprise any or all of: a retail sale price and information on: the number of cigarettes and tar and/or nicotine content in a cigarette packet, weight of tobacco, tobacco weight by origin, manufacturer selling price, retail selling price, importation price. Product information corresponding to other dutiable products to which the labels may be applied may equally be input to the database and/or applied to the labels. In the case of alcoholic products, information such as alcohol content by volume, volume of product, number of units of alcohol etc. may be applied to the label and/or input to the database. On any other dutiable product, it may be preferable to apply information relating to characteristics of that product, which are related to the duty paid on the product, to the label and/or to store them in the database as described above. The product information can further include product characteristics such as a list of contents etc, but may also include its origin, such as the place it was made, and/or use limitations such as an expiry date

In step 207, the manufacturer takes information concerning the products to which the series of serial numbers has been applied and provides this information to the database, where it is associated with the relevant series of serial numbers and, if present, corresponding randomly generated authentication codes, or the relevant encryption key for the series of labels and corresponding serial numbers. In step 208, the manufacturer provides information to the authorising body concerning the products to which the serial numbers have been applied. This may be global information concerning the totality of the products and the product characteristics and this information may further include financial information concerning tax relating to each of the products to be sold. In step 209, the authorising body can query the database 205 to verify that the information provided by the manufacturer during step 208 corresponds correctly to the detailed information relating to different serial number ranges provided during step 207. In addition, further information may be maintained in the system, such as: information about additional security features contained on the label or product and how to use them to validate the authenticity of a label/product. This can provide the advantage of giving clear instructions on how to validate the use of a label in the absence of any standard defining where to apply which authentication features and how to validate them. In step 210, a consumer may request information from the database corresponding to a particular serial number which has been applied to a product which he has in his possession. The data delivered by the database to the consumer may comprise any or all of the following: information stored in the database corresponding to that serial number; product quantity; product characteristics; information concerning the market for which the product was authorised; and any unique identifier applied to the authentication label. The consumer may further provide an overt unique identifier applied to the authentication label to the database, and the database may return information on whether that unique identifier is valid for the corresponding serial number or not. The same described verifications may be carried out by an agent of the authorising body to verify whether products in a market controlled by the authorising body have been correctly authorised by the authorising body or not. Agents of the authorising body may have access to a different or larger set of the data in the database than does a consumer.

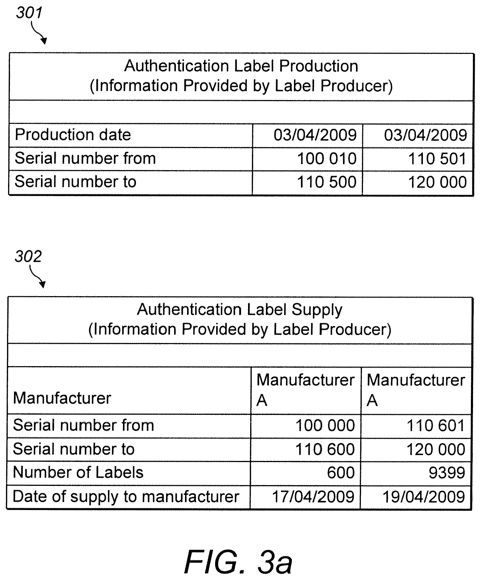

Figures 3a to 3c illustrate some example data structures which may be employed to implement the method of the present invention. In this particular example, the authentication labels are used as tax stamps, produced for a government to determine whether a particular product has indeed been authorised for distribution in a country and to further verify that the use of the tax stamp declared to the government by the manufacturer corresponds correctly to the actual characteristics of the products to which it has been applied.

Table 301 shows the information created by the authentication label producer and the table contains information on which ranges of serial numbers were produced on which date. This information is combined with the information in table 302, which further describes the manufacturer to which the authentication labels have been supplied, the number of labels supplied and the date upon which those labels were supplied. In this particular example, the information from table 301 and 302 is entered into the database in step 204 in Figure 2.

Table 303 depicts information supplied to the database by the manufacturer in step 207 of Figure 2. In this table, the manufacturer provides price and product-characteristic information corresponding to different ranges of the serial numbers issued to it. The ranges used in this table may be subsets of the ranges of serial numbers provided to the manufacturer by the authentication label producer and need not correspond exactly with the sizes of batches issued to the manufacturer. Table 304 contains further information, which may be used to trace a particular serial number back to a particular product and batch number for that product. This can provide a further function of product traceability for quality control purposes. The information in table 304 further includes the number of authentication labels issued, the number used, and the number scrapped. The scrapped authentication labels may be recovered by the authorising body to ensure that these are not used for counterfeiting or fraudulent purposes or for unauthorised application to a product.

Once the information from tables 301 to 304 has been provided to the database, data can be stored in the database as depicted in table 305. It can be seen here that for each range of serial numbers, it is possible to determine any or all of: the number of authentication labels issued; the number of labels used; the number of labels scrapped; the manufacturer to which the labels were issued; the description of the product to which the labels were applied; the authorised price for the product; the content of the product; the dates of label production and label supply to the manufacturer; the date on which the authentication label had any product information printed on it at the manufactures site; the date upon which the use of the label was declared to the authorising body; the production batch on which the label was utilised; and tax information relating to the product. A further column or columns may be included in table 305 containing unique identifiers corresponding to each serial number issued by the authentication label producer. However the storage of the unique identifiers may require an excessive amount of memory and an alternative is to store an encryption key(s) used to generate the unique identifiers, or alternatively to store reference information in a separate table. As illustrated in column 306 of table 305, an encryption key can be associated with individual serial numbers, or with a range or ranges of serial numbers. The encrypted version of the serial number can then be determined from the combination of the serial number and the encryption key and in this way, it is not necessary to store individual unique identifiers for each serial number, thus requiring less storage memory.

A method of improving the efficiency of data storage in a database for product authentication purposes can be to create a relationship between a serial number associated with a primary container, and a plurality of secondary container serial numbers, associated with secondary containers, which secondary containers are associated with the primary container and generally held within the primary container for transport. The secondary container serial numbers may contain the primary container serial number, and may include a secondary container sub-code, which is unique within a range of sub-codes used for the primary container. The secondary container sub-code may be a prefix or a suffix, or some other information added to the primary container serial number, and may be unique to the secondary container within the sub-set corresponding to the primary container. Products having the same product characteristics may be associated with a single primary container. In this case, it is only necessary to store the primary container serial number in the database, associated with product characteristics which are the same for all secondary containers within the primary container. Since a secondary container will be marked with its unique secondary container serial number, which contains the primary container serial number, the secondary container can be associated with the primary container and the corresponding product information in the database. Therefore, the number of serial numbers which need to be stored in the database is reduced by a factor. The factor being the number of secondary containers associated with each primary container. This allows more efficient use of the database to be made.

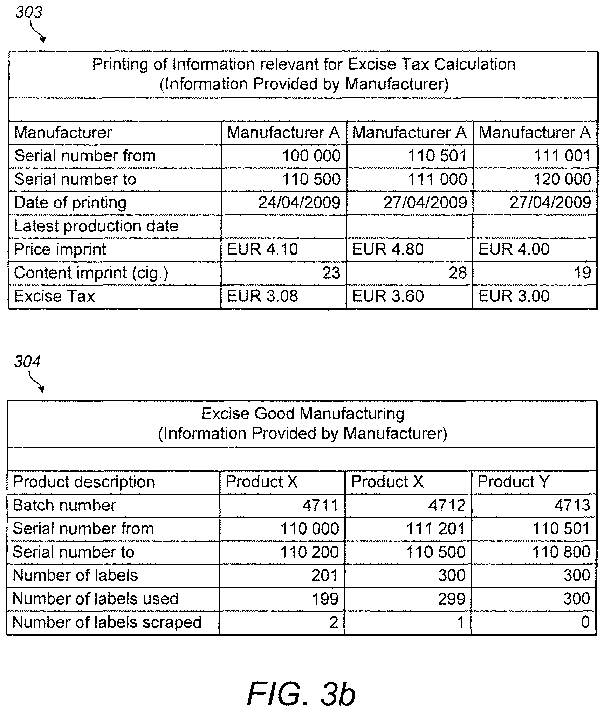

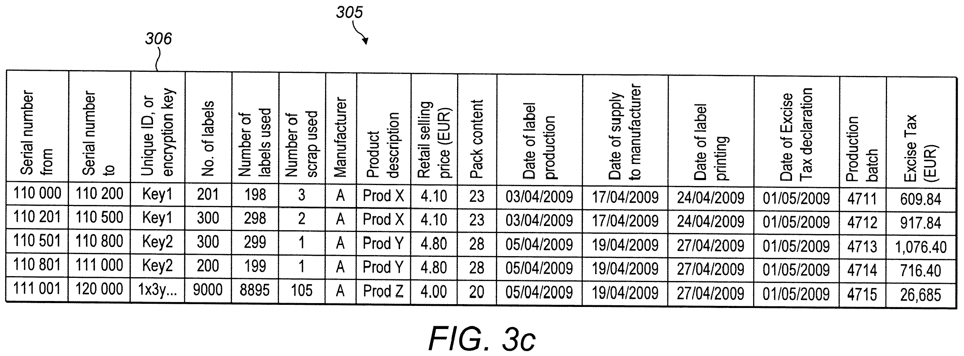

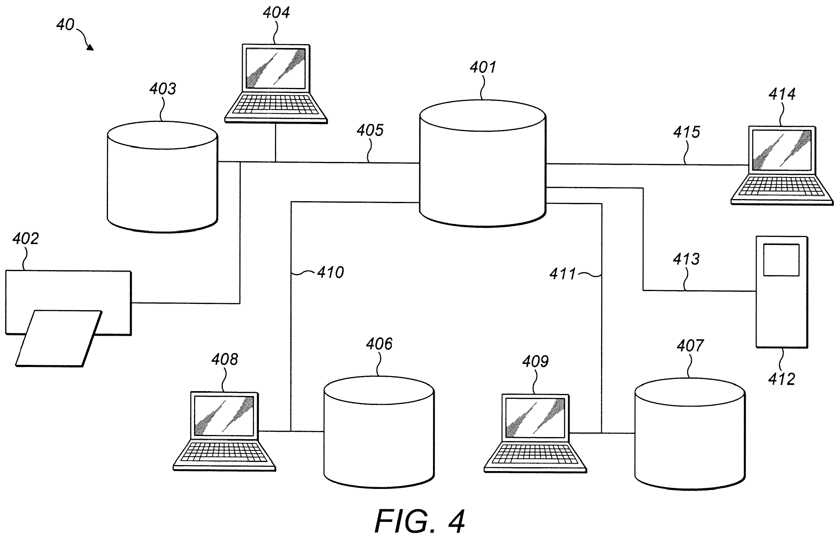

Figure 4 shows a system 40 which may be employed to carry out the method of the present invention. A database 401 is configured to hold information such as is described in Figure 3c. Database 401 is connected to a printer 402 in order that the printer can provide information such as that shown in Figure 3a to the database 401. Conversely, the printer may be sent instructions to print labels based upon the information shown in Figure 3a. A printer database 403 may optionally be used to temporarily store the data in Figure 3a before delivering the data in bulk to database 401 or to hold bulk information downloaded from the database prior to beginning a printing run. A computer terminal 404 may be provided to control the printer and printer database 403 and to control the delivery of information to/from database 401. Printer 402, printer database 403 and printer control terminal 404 may be connected to database 401 via a data link 405. Data link 405 may be a permanent or intermittent data connection, either across a local access network, over the world wide web, or any suitable data network. The delivery of the information cross link 405 to database 401 may be secured by well known security systems such as SSL or SRA authentication systems, to help reduce the risk of data theft. Manufacturer databases 406 and 407 may be held by different manufacturers at their manufacturing or distribution sites, or by distributors at their distribution sites. These are controlled from manufacturer database controller terminals 408 and 409. Databases 406 and 407 may be configured to contain information such as that described in Figure 3b. Data connection links 410 and 411 may be used to deliver the data shown in Figure 3b to database 401. This connection may be permanent or intermittent and the information may be either input directly to database 401 or temporarily stored on database 406 or 407 before being delivered in bulk to database 401. This can be particularly suited to allowing data connections 410 and 411 to be intermittent connections, which are only connected when necessary. Data connection 410 and 411 will preferably be secured in a similar way to data connection 405, although this is not essential. However, the use of secured data connections can help to avoid the data delivered by the manufacturers or the distributors to database 401 being intercepted or copied by unauthorised third parties.

Database 401 may be queried by use of a mobile communications device 412, such as a PDA or mobile telephone. Device 412 can be connected to database 401 via data link 413, which may be a wired or wireless data connection. Where simple code verification is carried out, it may not be necessary for the data connection 413 to be a secure connection, since this is intended for use by members of the public to verify the authenticity of the product which they have bought. However, if any additional information is requested from the member of the public, or if data sent to the user confirming the authenticity of a product, then a secured connection may be preferable and this can be implemented in a similar way to connection 405, 410 or 411. Querying from a mobile communications device in this way may also be carried out by the manufacturers, distributors, the authorising body or their agents. This type of query may also be carried out by a home or mobile or business computer terminal 414 over a database connection 415. As with the other data connections, this may be a direct connection to the database, or a secured or unsecured internet connection or a virtual private network (VPN) connection.

There are numerous advantages associated with the method of the present invention. Consumers can check that the product has indeed been authorised for use or sale in their territory and that the authentication label has been validly applied to a product having the correct characteristics. An authorising body can verify that products offered to the public in its jurisdiction have been correctly authorised and that manufacturers placing these products on the market have correctly declared which authentication labels have been applied to which products. A further benefit of the present invention is that the authorising body can be in control of the production and distribution of the authentication labels. The authentication labels can then be produced centrally for a single territory or jurisdiction and thus the authorising body for that jurisdiction only need deal with a single variant of authentication label. Further, where the system is adopted by a number of different authorising bodies, the same system may be used by a single manufacturer to supply products and corresponding authentication information to a number of different authorising bodies. A further advantage of the present invention is that in certain embodiments, it is not necessary to install proprietary printing or detection equipment in the factory of the manufacturer, over and above what is already present for use in detecting the presence of labels, for example. The method may therefore be implemented without the need for proprietary detection equipment to verify the validity of authentication labels. Thus, centrally stored authentication information may be used to verify the authenticity of the product by any agent of the authorising body, manufacturer, other third party, or a member of the public, without the need for dedicated proprietary equipment. The method of the present invention and its effective product authorisation or validation system may be put in place with a minimum of specialised technical installation, whilst keeping the format and level of inherent authentication in the authentication labels within the control of the authorising body.

### Embodiments

Numbered embodiment 1: A method of verifying the authenticity of a dutiable product, comprising the steps of: receiving a plurality of authentication labels, the authentication labels each comprising one of a series of unique identifiers, the series of unique identifiers being stored in an authentication database; applying each of the authentication labels to a series of products; entering in the database product information corresponding to the series of products to which the label has been applied; associating the product information with the series of unique identifiers in the database; communicating to the issuer of the labels validation information corresponding to the products to which the authentication labels have been applied.

Numbered embodiment 2: A method of verifying the authenticity of a dutiable product, comprising the steps of: issuing a plurality of authentication labels to a manufacturer of a product, the authentication labels each comprising one of a series of unique identifiers, the series of unique identifiers being stored in an authentication database; receiving from the manufacturer product information corresponding to the series of products to which the label has been applied, the product information being associated with the series of unique identifiers in the database; receiving from the manufacturer validation information corresponding to the products to which the authentication labels have been applied.

Numbered embodiment 3: A method according to claim 1, further comprising the step of communicating to the issuer of the authentication labels usage information corresponding to the products to which the authentication labels have been applied.

Numbered embodiment 4: A method according to numbered embodiment 2, further comprising the step of receiving usage information from the manufacturer corresponding to the products to which the authentication labels have been applied.

Numbered embodiment 5: A method according to numbered embodiment 1, further comprising the step of querying the database to extract information concerning a number of used unique identifiers and generating a report based upon the information extracted.

Numbered embodiment 6: A method according numbered embodiment 5, further comprising the step of providing information based upon the report to the authorising body.

Numbered embodiment 7: A method according numbered embodiment 2, further comprising receiving a report from the manufacturer and comparing the information in the report with the information in the database.

Numbered embodiment 8: A method according to any one of numbered embodiments 5 to 7, wherein the report comprises a payment reference, which is associated with a range of unique identifiers and to a payment made to the authorising body.

Numbered embodiment 9: A method according to any one of the preceding numbered embodiments, wherein the authentication labels optionally further comprise a second unique identifier, the second unique identifier being associated with the first unique identifier in the database.

Numbered embodiment 10: A method according to any one of the preceding numbered embodiments, further comprising the step of applying the product information to the authentication labels.

Numbered embodiment 11: A method according to any preceding numbered embodiment, wherein the product is a tobacco product or an alcoholic product and the product information comprises any or all of: number of individual items in the product; amount of tobacco contained in the product; tar content of the product; nicotine content of the product; and a price of the product, weight of tobacco, tobacco weight by origin, manufacturer selling price, retail selling price, importation price, alcohol content by volume, volume of product, number of units of alcohol, a list of contents, product origin, such as the place of manufacture, and/or use limitations, or an expiry date.

Numbered embodiment 12: A method according to any one of the preceding numbered embodiments, further comprising the steps of: retrieving at least one product to which one of the authentication labels has been applied; and comparing either one of, or both of, the unique identifier(s) with information in the database to determine the authenticity of the product.

Numbered embodiment 13: A method according to numbered embodiment 12, wherein the unique identifier is compared with the received product information and/or with the validation information and/or with the usage information.

Numbered embodiment 14: A method according to any one of the preceding numbered embodiments, further comprising the step of recording in the database a value indicating that a label corresponding to a unique identifier has been scrapped or destroyed.

Numbered embodiment 15: A method according to any one of the preceding numbered embodiments, wherein at least one unique identifier stored in the database corresponds to a primary container, and wherein secondary containers are associated with the primary container by means of secondary container unique identifiers, the secondary container unique identifiers comprising the unique identifier of the primary container.

## Claims

1. A method of verifying the authenticity of a dutiable product performed by an authentication database running on a computer server, comprising the steps of:
receiving, at the authentication database, a range of sequential, first, unique identifiers, each first unique identifier associated with an authentication label physically affixed to a product from a batch of products;
receiving, at the authentication database, a payment reference corresponding to a payment made in connection with the batch of products associated with the range of sequential unique identifiers;
storing, in the authentication database, the range of sequential unique identifiers, the product information and the payment reference in association with each other;
receiving, from a communications device, a query relating to a code read from a product; and
comparing, via the authentication database, the code against the range of unique identifiers stored in the authentication database which have an associated payment reference to verify the authenticity of the product.

2. A method according to claim 1, further comprising receiving, at the authentication database, product information for a batch of products, wherein the comparison step comprises comparing, via the authentication database, the code against the range of unique identifiers stored in the authentication database which have an associated payment reference and associated product information to verify the authenticity of the product.

3. A method according to claim 1 or 2, further comprising the step of receiving usage information from a manufacturer corresponding to the products to which the authentication labels have been applied.

4. A method according to any preceding claim, further comprising the step of querying the database to extract information concerning a number of used unique identifiers and generating a report based upon the query.

5. A method according claim 4, further comprising the step of providing information based upon the report to an authorising body.

6. A method according to any one of the preceding claims, further comprising:
receiving a plurality of second unique identifiers, each second unique identifier associated with an authentication label physically affixed to a product from a batch of products and the second unique identifier being associated with the first unique identifier in the database.

7. A method according to any preceding claim, wherein the product information comprises any or all of: a list of contents, product origin, and/or use limitations.

8. A method according to any preceding claim, wherein the product is a tobacco product and the product information comprises any or all of: number of individual items in the product; amount of tobacco contained in the product; tar content of the product; nicotine content of the product; weight of tobacco; tobacco weight by origin; and a price of the product.

9. A method according to any of claims 1 to 7, wherein the product is an alcoholic product and the product information comprises any or all of: alcohol content by volume, volume of product, number of units of alcohol.

10. A method according to any of claims 3 to 9, when dependent on claim 2, wherein the unique identifier is compared with the received product information.

11. A method according to any of claims 3 to 9, when dependent on claim 2, wherein the unique identifier is compared with the payment reference.

12. A method according to any of claims 3 to 9, when dependent on claim 2, wherein the unique identifier is compared with the usage information.

13. A method according to any preceding claim, further comprising the step of recording in the database a value indicating that a label corresponding to a unique identifier has been scrapped or destroyed.

14. A method according to any preceding claim, wherein at least one unique identifier stored in the database corresponds to a primary container, and wherein secondary containers are associated with the primary container by means of secondary container unique identifiers, the secondary container unique identifiers comprising the unique identifier of the primary container.

15. A method of manufacturing a dutiable product for product authenticity verification using the method of any preceding claim, comprising the steps of:
receiving a batch of authentication labels, each authentication label comprising a unique identifier, where the unique identifiers in the batch of authentication labels are sequential;
producing a batch of products having substantially identical product characteristics, each product comprising an opening portion;
physically affixing authentication labels to the batch of products in sequential order of the unique identifiers;
entering, in an authentication database running on a computer server, via at least one manufacturer computer terminal, a range of sequential unique identifiers, each unique identifier associated with an authentication label physically affixed to a product from the batch of products;
entering, in the authentication database, via the at least one manufacturer computer terminal, product information for the batch of products associated with the range of sequential unique identifiers;
entering, in the authentication database, via the at least one manufacturer computer terminal, a payment reference corresponding to a payment made in connection with the batch of products associated with the range of sequential unique identifiers; and
storing, in the authentication database, the range of sequential unique identifiers, the product information and the payment reference in association with each other.
